# FASCICULE DE BREVET EUROPEEN

(11) **EP 3 021 602 B1**
(45) Date de publication et mention de la délivrance du brevet: **04.03.2020**
(21) Numéro de dépôt: 15194547.4
(22) Date de dépôt: 13.11.2015
(51) Int. Cl.: H04L 29/08, H04W 8/22

(54) **PROCÉDÉ DE PARAMÉTRAGE D'UN SERVICE DE COMMUNICATION DÉLIVRÉ PAR UN SERVEUR D'UN FOURNISSEUR DE SERVICE À UN MODULE DE COMMUNICATION D'UN UTILISATEUR PAR L'INTERMÉDIAIRE D'UN DISPOSITIF PORTATIF**
PARAMETRIERUNGSVERFAHREN EINES KOMMUNIKATIONSDIENSTES, DER VON EINEM SERVER EINES DIENST-PROVIDERS AN EIN KOMMUNIKATIONSMODUL EINES NUTZERS ÜBER EIN TRAGBARES GERÄT ÜBERMITTELT WIRD
METHOD FOR PARAMETERISING A COMMUNICATION SERVICE PROVIDED BY A SERVER OF A SERVICE PROVIDER TO A COMMUNICATION MODULE OF A USER VIA A PORTABLE DEVICE

(30) Priorité: 14.11.2014 FR 1461033
(43) Date de publication de la demande: 18.05.2016
(73) Titulaire: Orange, 75015 Paris (FR)
(72) Inventeur: FOUCAULT, Béatrice, 22730 TREGASTEL (FR); LE HUEROU, Emmanuel, 22700 SAINT QUAY PERROS (FR)
(74) Mandataire: Regimbeau

(56) Documents cités:
- FR-A1- 2 999 001
- KR-B1- 101 440 362
- US-A1- 2004 254 998
- US-A1- 2006 030 264
- US-A1- 2013 217 364
- US-B1- 6 671 508
- SIEWIOREK D ET AL: "SenSay: a context-aware mobile phone", WEARABLE COMPUTERS, 2003. PROCEEDINGS. SEVENTH IEEE INTERNATIONAL SYMP OSIUM ON 21-23 OCT. 2003, PISCATAWAY, NJ, USA,IEEE, LOS ALAMITOS, CA, USA, 21 octobre 2003 (2003-10-21), pages 248-249, XP010673813, DOI: 10.1109/ISWC.2003.1241422 ISBN: 978-0-7695-2034-6
- alan bloom: "Rumoured Microsoft Smartwatch to integrate with Lync?", , 23 octobre 2014 (2014-10-23), pages 1-2, XP002741617, Extrait de l'Internet: URL:http://discoverucc.com/lync-news/micro soft-smartwatch-with-lync/ [extrait le 2015-06-29]

## Description

### DOMAINE TECHNIQUE GENERAL

L'invention a pour objet la prise en compte de la disponibilité d'un utilisateur par un service de communication. Elle concerne plus particulièrement un procédé de paramétrage d'un tel service en fonction du statut de disponibilité de l'utilisateur fonction du contexte de celui-ci à l'aide d'un dispositif portatif, un produit programme d'ordinateur, un dispositif portatif et un système.

### ETAT DE LA TECHNIQUE

De nombreux services de communication, tels que des services de messagerie ou de vidéoconférence, proposent à leurs utilisateurs d'indiquer leur disponibilité afin que le service adopte un comportement adapté. L'utilisateur d'un tel service peut ainsi par exemple indiquer au fournisseur de service qu'il est indisponible et ne peut recevoir d'appels, ou bien qu'il peut recevoir des messages uniquement.

Une telle possibilité de paramétrage est néanmoins souvent mal employée par les utilisateurs. En effet, si le paramétrage du statut de disponibilité nécessite une action manuelle de l'utilisateur, on constate que de nombreux utilisateurs considèrent la mise à jour d'un tel statut comme une contrainte et sont donc susceptibles de ne pas procéder systématiquement à une telle mise à jour lorsque leur disponibilité change. Le statut courant de tels utilisateurs risque alors régulièrement de ne pas refléter leur disponibilité réelle. Certains systèmes proposent une détection automatique de la disponibilité de l'utilisateur en fonction de son contexte mais celle-ci est bien souvent imparfaite et risque également de sélectionner un statut de disponibilité ne correspondant pas à la disponibilité réelle de l'utilisateur. Un service de communication risque alors d'adapter un comportement inapproprié pour l'utilisateur car basé sur un statut de disponibilité erroné, et de transmettre par exemple à un utilisateur des appels alors qu'il souhaite ne pas être dérangé.

De plus, une telle situation dans laquelle le statut de disponibilité indiqué pour un utilisateur est erroné perdure généralement pendant une longue durée avant que le statut de l'utilisateur ne soit corrigé. Les dispositifs existants fournissant de tels services de communication ne permettent en effet pas à celui-ci de s'apercevoir rapidement que son statut de disponibilité sélectionné est erroné. Si l'utilisateur n'utilise plus son dispositif ou bien l'utilise pour une autre fonction que celle de communication, son statut courant n'est plus visible et l'utilisateur ne peut pas se rendre compte qu'il ne l'a pas mis à jour ou que la mise à jour automatique a sélectionné un statut inadapté. Le statut de disponibilité erroné perdure alors jusqu'à ce que l'utilisateur utilise à nouveau le service de communication et se préoccupe de la mise à jour de son statut de disponibilité, ou bien jusqu'à ce qu'il change suffisamment de contexte pour déclencher une nouvelle détection automatique.

Document US6671508 décrit un procédé pour la notification d'un changement de status de disponibilité d'un utilisateur, le status étant détecté sur la base d'un calendrier, position ou l'activité de l'écran. Le nouveau status est envoyé à un serveur.

Document KR101440362 décrit un smartwatch qui, à l'aide d'un senseur, détermine si l'utilisateur se trouve dans un état d'urgence et declanche un appel 112 vers un serveur.

Document Siewiorek D. et al.: "SenSay: a context aware mobile-phone" décrit la détection du status de l'utilisateur par un boîtier portable muni des senseurs de mouvement et microphone et le changement de la configuration de l'équipement utilisateur sur la base du status détecté.

Document US2006/030264 décrit un procédé de mise à jour automatique d'un status de l'utilisateur sur la base de la détection d'un changement dans l'activité de l'utilisateur sur un deuxième dispositif.

Il existe donc un besoin d'un procédé de paramétrage d'un service de communication permettant à un utilisateur de mettre à jour facilement son statut de disponibilité.

### PRESENTATION DE L'INVENTION

La présente invention se rapporte à un procédé, un produit programme d'ordinateur, dispositif portatif et système selon les revendications 1 et 8-10.

Un premier aspect se rapporte ainsi à un procédé de paramétrage d'un service de communication délivré par un serveur d'un fournisseur de service à un module de communication d'un utilisateur, le service de communication étant configuré selon un statut de disponibilité, comprenant les étapes suivantes :
- détection d'un changement de contexte d'utilisation d'un dispositif portatif dudit utilisateur distinct dudit module de communication,
- détermination d'un nouveau de statut de disponibilité en fonction du changement de contexte d'utilisateur détecté;
- transmission d'un message relatif au nouveau statut de disponibilité à destination du serveur du fournisseur de service ou du module de communication de sorte que le service de communication soit configuré à partir du nouveau statut de disponibilité déterminé.

Un tel procédé permet de mettre à jour facilement le statut de disponibilité utilisé pour configurer un service de communication. Ainsi, la détection d'un changement de contexte d'utilisation d'un dispositif portatif d'un utilisateur, par exemple une montre, déclenche la configuration du service de communication délivré à un module de communication de l'utilisateur selon un nouveau statut de disponibilité. Le procédé de paramétrage peut être mis en œuvre par le dispositif portatif ou par un terminal comprenant le module de communication.

Selon un mode particulier de réalisation le procédé de paramétrage comprend en outre une étape de restitution audit utilisateur par l'intermédiaire d'une interface utilisateur du dispositif portatif, d'une information relative au nouveau statut de disponibilité déterminé. Ainsi, l'utilisateur est informé du statut de disponibilité qui est utilisé pour configurer le service de communication délivré au module de communication de l'utilisateur.

Selon un autre mode particulier de réalisation la détection d'un changement de contexte d'utilisation comprend une étape de réception par le module de communication d'un message en provenance du dispositif portatif comprenant une information indiquant un changement de contexte d'utilisation du dispositif portatif. Selon ce mode particulier de réalisation de l'invention, le procédé de paramétrage est mis en œuvre par un terminal comprenant le module de communication. Le message comprenant une information indiquant un changement de contexte d'utilisation du dispositif portatif reçu par le module de communication permet au terminal de déterminer un nouveau statut de disponibilité.

Dans une première variante de mise en œuvre, l'étape de détection du changement de contexte d'utilisation du dispositif portatif, comprend unemodification du mode d'affichage des informations restituées par le dispositif portatif.

Ainsi, lorsque le dispositif portatif comprend un moyen de sélection, par exemple un bouton ou une molette de sélection ou autres, une commande manuelle peut être saisie par l'utilisateur en activant le moyen de sélection, par exemple par un appui sur ledit bouton du dispositif portatif ou en tournant la molette de sélection.

L'utilisateur peut ainsi, lorsque son contexte change, sélectionner très facilement un nouveau contexte d'utilisation du dispositif portatif.

Dans une deuxième variante de mise en œuvre, l'étape de détection du changement de contexte d'utilisation du dispositif portatif comprend une détection automatique du contexte de l'utilisateur.

Le contexte d'utilisation du dispositif portatif peut ainsi être mis à jour de manière adaptée au contexte de l'utilisateur sans nécessiter une action de celui-ci.

L'étape de détection automatique du contexte peut comprendre une étape de localisation dudit dispositif portatif.

Un contexte d'utilisation du dispositif portatif adapté peut ainsi être sélectionné en fonction du lieu (travail, maison...) dans lequel se trouve l'utilisateur.

L'étape de détection automatique du contexte peut comprendre une étape de détection d'un dispositif de communication dans l'environnement dudit utilisateur.

Le contexte de l'utilisateur peut ainsi être déduit en fonction de la proximité d'un objet communiquant particulier tel qu'un point d'accès d'un réseau spécifique ou bien un objet sur lequel aura été apposée une étiquette RFID.

Le message relatif au nouveau statut de disponibilité dudit utilisateur peut être transmis à un serveur de gestion de contexte, ledit serveur du fournisseur de service paramétrant ledit service par l'intermédiaire dudit serveur de gestion de contexte ;
Un tel serveur de gestion de contexte peut ainsi mettre à disposition du serveur du fournisseur de service le statut de disponibilité courant du service de communication via lequel l'utilisateur peut être contacté par d'autres utilisateurs, ou bien lui transmettre des informations de paramétrage plus détaillées qu'un simple statut de disponibilité, sans requérir davantage d'actions de la part de l'utilisateur.

Ladite interface utilisateur du dispositif portatif affichant des éléments d'interface correspondant à un ensemble de fonctionnalités à afficher, l'étape de restitution d'une information relative au nouveau statut de disponibilité de l'utilisateur du procédé selon le premier aspect peut comprendre une sélection d'un ensemble de fonctionnalités à afficher en fonction dudit nouveau statut de disponibilité de l'utilisateur et l'affichage des éléments d'interface correspondant audit ensemble de fonctionnalités sélectionnées.

Les différents services rendus à l'utilisateur par le dispositif portatif par le biais de ces fonctionnalités peuvent ainsi être adaptés automatiquement en fonction du contexte de l'utilisateur. Une telle adaptation permet également à l'utilisateur de se rendre plus facilement compte suite à un changement de contexte que le statut de disponibilité courant du service de communication n'est plus adapté au contexte de l'utilisateur.
Lorsque l'ensemble de fonctionnalités à afficher correspond à des fonctionnalités du service de communication, l'utilisateur du dispositif portatif est ainsi informé des fonctionnalités disponibles pour le service de communication délivré au module de communication. Par exemple, lorsque le nouveau statut de disponibilité correspond à un statut non joignable par des appels voix, un élément d'interface affiché peut correspondre à un symbole de téléphone barré indiquant à l'utilisateur qu'il ne recevra pas d'appels voix.

Le procédé selon le premier aspect peut comprendre en outre une étape de paramétrage dudit dispositif portatif ou dudit module de communication en fonction du nouveau statut de disponibilité de l'utilisateur.

Le contexte de l'utilisateur peut ainsi être pris en compte localement au niveau du dispositif portatif ou du module de communication pour paramétrer ceux-ci indépendamment du service de communication fourni par le serveur du fournisseur de service.

Un deuxième aspect se rapporte à un produit programme d'ordinateur comprenant des instructions de code pour l'exécution d'un procédé selon le premier aspect lorsque ce programme est exécuté par un processeur.

Un troisième aspect se rapporte à un dispositif de paramétrage d'un service de communication délivré par un serveur d'un fournisseur de service à un module de communication d'un utilisateur, le service de communication étant configuré selon un statut de disponibilité, comprenant :
- un module de traitement de données apte à détecter un changement de contexte d'utilisation d'un dispositif portatif dudit utilisateur distinct dudit module de communication et à déterminer un nouveau statut de disponibilité d'un utilisateur en fonction du changement de contexte d'utilisation détecté ;
- un module d'interface apte à transmettre un message relatif au nouveau statut de disponibilité dudit utilisateur à destination du serveur du fournisseur de service ou du module de communication, de sorte que le service de communication soit configuré à partir du nouveau statut de disponibilité de l'utilisateur déterminé.

Un quatrième aspect se rapporte à un dispositif portatif comprenant un dispositif de paramétrage selon le troisième aspect et comportant une interface utilisateur pour restituer audit utilisateur une information relative au nouveau statut de disponibilité.

Un cinquième aspect se rapporte à un terminal comprenant un dispositif de paramétrage selon le troisième aspect et un module de communication.

Un autre aspect se rapporte aussi à un système de paramétrage d'un service de communication comprenant un dispositif portatif selon le quatrième aspect, un module de communication et un serveur d'un fournisseur de service.
De tels produit programme d'ordinateur, dispositif de paramétrage, dispositif portatif, terminal et système de paramétrage présentent les mêmes avantages que ceux évoqués pour le procédé selon le premier aspect.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre schématiquement des moyens matériels pour une mise en œuvre possible pour l'invention ;
- la figure 2 est un diagramme schématisant un procédé de paramétrage d'un service de communication selon un mode de mise en œuvre de l'invention ;

### DESCRIPTION DETAILLEE

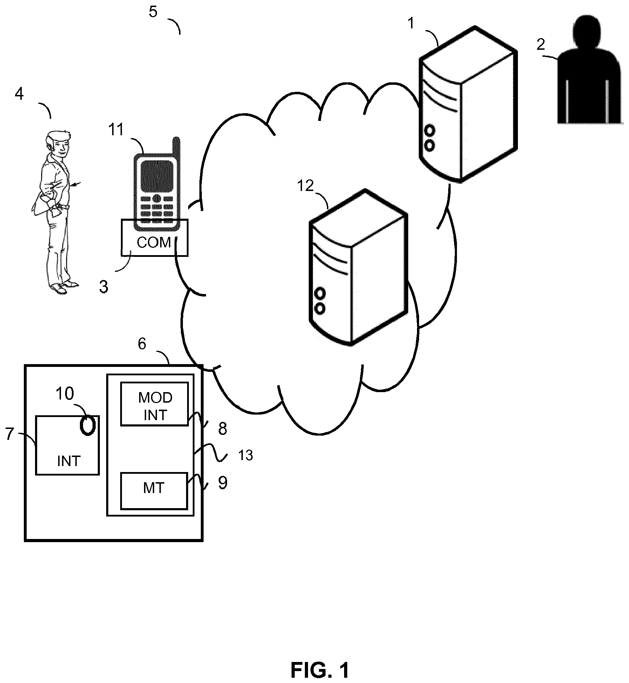

En référence à la **figure 1****,** une mise en œuvre pour l'invention concerne un procédé de paramétrage d'un service de communication délivré par un serveur 1 d'un fournisseur de service 2 à un module de communication 3 d'un utilisateur 4 dans un système de paramétrage d'un service de communication 5, ledit service étant configuré selon un statut de disponibilité.

Le module de communication 3 peut être connecté au serveur 1 du fournisseur de service afin de se voir délivrer le service de communication et être relié à un dispositif portatif 6 détenu par ledit utilisateur.

Le procédé propose d'utiliser un dispositif de paramétrage 13 pour configurer automatiquement le service de communication délivré au module de communication selon un statut de disponibilité déterminé à partir d'un contexte d'utilisation du dispositif portatif.

Un tel dispositif de paramétrage 13 peut comporter un module d'interface 8, de type filaire tel qu'une liaison Ethernet ou USB, ou sans-fil tel qu'une connexion Wifi ou Bluetooth, pour connecter ledit dispositif de paramétrage au module de communication ou au serveur du fournisseur de service, et un module de traitement de données 9 comportant un processeur.

Ce dispositif de paramétrage peut être compris dans un terminal 11 de l'utilisateur ou dans le dispositif portatif 6.

Un tel dispositif portatif peut être une montre intelligente (« smartwatch ») ou tout autre dispositif détenu par l'utilisateur comprenant une interface utilisateur 7. Un tel dispositif portatif peut comprendre un module d'interface de type filaire tel qu'une liaison Ethernet ou USB, ou sans-fil tel qu'une connexion Wifi ou Bluetooth, pour connecter ledit dispositif portatif au module de communication ou au serveur du fournisseur de service, et un module de traitement de données comportant un processeur. L'interface utilisateur 7 du dispositif portatif peut comprendre au moins un bouton 10 pour permettre à l'utilisateur d'interagir avec le dispositif portatif. Ce bouton peut être un bouton physique tel qu'un bouton poussoir, ou bien un bouton virtuel affiché sur un écran tactile.

Selon l'invention, un tel dispositif portatif permet à l'utilisateur de changer facilement le statut de disponibilité selon lequel le service de communication est configuré. Lorsque le contexte de l'utilisateur change, par exemple lorsqu'il passe du contexte « en réunion » à un contexte « sport », l'utilisateur change le contexte d'utilisation du dispositif portatif, par exemple en changeant l'affichage de l'écran du dispositif portatif ou en activant une fonction de contrôle de rythme cardiaque mise en œuvre par le dispositif portatif. Un tel changement de contexte d'utilisation du dispositif portatif permet alors selon l'invention, de modifier le statut de disponibilité selon lequel le service de communication est configuré.

Le caractère portatif d'un objet tel qu'une montre procure en outre l'avantage qu'il est consulté plus souvent et plus facilement par l'utilisateur que les terminaux utilisés usuellement pour communiquer via un service de communication ou pour paramétrer un tel service de communication tels qu'un ordinateur ou un téléphone portable. L'utilisateur peut ainsi en consultant un tel objet portatif se rendre compte de la cohérence de son statut de disponibilité courant avec son contexte. A titre d'exemple, si le contexte de l'utilisateur correspond au fait qu'il se trouve en réunion, un statut de disponibilité correspondant peut indiquer que l'utilisateur accepte les messages textes et les emails mais pas les appels. A l'inverse, si le contexte de l'utilisateur correspond au fait qu'il est en train de faire du sport et porte une oreillette, un statut de disponibilité correspondant peut autoriser les appels et la délivrance de messages vocaux mais pas de messages textes puisque l'utilisateur est dans l'incapacité de consulter un écran. La provenance des appels peut de plus être restreinte à une catégorie d'interlocuteurs, par exemple la famille.

Le module de communication peut comprendre un module d'interface, de type filaire tel qu'une liaison Ethernet ou USB et/ou sans-fil tel qu'une connexion Wifi ou Bluetooth, lui permettant de se connecter au serveur du fournisseur de service et éventuellement au dispositif portatif.

Dans un mode de réalisation le module de communication joue le rôle de relais entre le dispositif de paramétrage et le serveur du fournisseur pour transmettre au serveur 1 des informations concernant le statut de disponibilité de l'utilisateur. Le module de communication et le dispositif de paramétrage sont alors reliés par l'intermédiaire de leurs modules d'interface.

Dans un autre mode de réalisation, le dispositif de paramétrage est en communication directe avec le serveur du fournisseur de service par le biais de son module d'interface, sans intervention du module de communication. Le module de communication et le dispositif de paramétrage peuvent alors ne pas être reliés directement.

Le module de communication 3 peut être compris dans le terminal 11 de l'utilisateur distinct du dispositif portatif. Un tel terminal peut consister en un téléphone mobile, un « smartphone », une tablette, une console de jeux, un ordinateur de bureau ou portable, un PDA (« Personal Digital Assistant ») ou tout autre terminal doté de moyens de communication avec ou sans-fil lui permettant d'accéder au réseau auquel est connecté le serveur du fournisseur de service. Un tel réseau peut alors être le réseau Internet ou un réseau de téléphonie mobile du type GSM, GPRS, UMTS, LTE...

Le serveur du fournisseur de service 1 peut comprendre une mémoire vive et des moyens de stockage tels qu'une mémoire non volatile réinscriptible (mémoire flash ou mémoire EEPROM) pouvant stocker une base de données et des moyens de traitement comportant un processeur. Le serveur peut également comprendre des moyens d'interface lui permettant de se connecter au module de communication 3, de type filaire tel qu'une liaison Ethernet, ou sans-fil tel qu'une connexion Wifi ou Bluetooth.

Le service de communication délivré par ledit serveur du fournisseur de service audit module de communication peut être tout type de service de communication tel qu'un service d'appel vocal, de messagerie (email, SMS, MMS...), de chat ou de vidéoconférence.

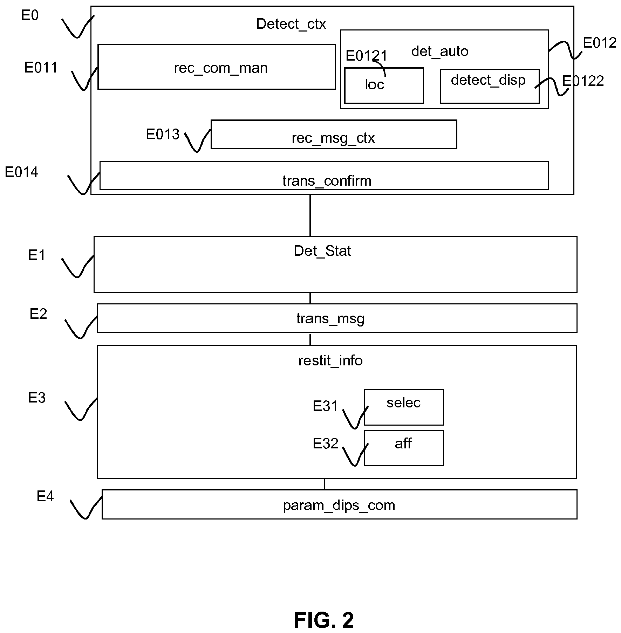

Un serveur de gestion de contexte 12 peut également être connecté au module de communication 3 ou au dispositif de paramétrage 13 et au serveur 1 du fournisseur de service. Un tel serveur de gestion de contexte peut également comprendre une mémoire vive et des moyens de stockage tels qu'une mémoire non volatile réinscriptible (mémoire flash ou mémoire EEPROM) pouvant stocker une base de données et des moyens de traitement comportant un processeur. Le serveur peut également comprendre des moyens d'interface de type filaire tel qu'une liaison Ethernet, ou sans-fil tel qu'une connexion Wifi ou Bluetooth lui permettant de se connecter au module de communication 3 ou au dispositif de paramétrage 13 et au serveur 1 du fournisseur de service.
Selon un mode particulier de réalisation de l'invention, le serveur de gestion de contexte 12 est intégré dans le serveur du fournisseur de service.
Comme illustré en **figure 2****,** pour pouvoir paramétrer le service de communication délivré par le serveur du fournisseur de service au module de communication, le service de communication étant configuré selon un statut de disponibilité, les étapes suivantes sont mises en œuvre par le dispositif de paramétrage 13 :
- détection E0 d'un changement de contexte d'utilisation d'un dispositif portatif de l'utilisateur,
- détermination E1 d'un nouveau de statut de disponibilité dudit utilisateur en fonction du changement de contexte d'utilisation du dispositif portatif détecté,
- transmission E2 d'un message relatif au nouveau statut de disponibilité dudit utilisateur à destination du serveur 1 du fournisseur de service ou du module de communication de sorte que le service de communication soit configuré à partir du nouveau statut de disponibilité déterminé.
Une étape de restitution E3 audit utilisateur par l'intermédiaire de ladite interface utilisateur 7 du dispositif portatif d'une information relative au nouveau statut de disponibilité peut également être mise en œuvre.
Le dispositif portatif permet ainsi de maintenir à tout moment l'utilisateur conscient de son statut de disponibilité et permet de modifier un tel statut si celui-ci n'est pas le statut que l'utilisateur souhaite.
Selon un exemple, le procédé de paramétrage est mis en œuvre par le terminal 11 de l'utilisateur qui comprend alors le module de communication 3 et le dispositif de paramétrage 13.
Préalablement à la mise en œuvre de l'étape E0, le dispositif portatif modifie son contexte d'utilisation par exemple suite à une commande manuelle de l'utilisateur ou une commande automatique telles qu'expliquées ci-dessous (étape E011 ou E012).
Un changement de contexte d'utilisation du dispositif portatif correspond par exemple à une modification du mode d'affichage des informations restituées par le dispositif portatif. Par exemple, si le dispositif portatif est une montre, le mode d'affichage de l'heure et d'autres données peut être modifié de sorte à adapter les données affichées en fonction des activités de l'utilisateur (réunion, travail, sport), ...
Suite à la modification du contexte d'utilisation du dispositif portatif, le dispositif portatif émet un message à destination du module de communication du terminal 11 comprenant une information d'un tel changement.
Dans le procédé de paramétrage la détection E0 d'un changement de contexte d'utilisation du dispositif portatif de l'utilisateur est mise en œuvre par la réception par le module de communication du terminal 11 du message émis par le dispositif portatif et comprenant une information indiquant le changement de contexte d'utilisation du dispositif portatif.

Selon cet exemple, lors de l'étape E1, le dispositif de paramétrage du terminal 11 détermine alors un nouveau statut de disponibilité, à partir du changement de contexte d'utilisation du dispositif portatif détecté. Une telle détermination est par exemple faite à partir d'un ensemble de statuts de disponibilité dont les paramètres sont stockés dans une mémoire du terminal 11, chaque statut de disponibilité étant associé à un contexte d'utilisation du dispositif portatif. Pour chaque fonctionnalité du service de communication telle que les appels voix ou visio, les messages textes, les messages vocaux ou vidéo, les paramètres d'un statut de disponibilité indiquent si la fonctionnalité est autorisée ou non dans le contexte d'utilisation du dispositif portatif.

Lors de l'étape E2, le dispositif de paramétrage 13 du terminal 11 transmet au serveur 1 un message comprenant une information relative au nouveau statut de disponibilité déterminé lors de l'étape E1.

Selon un autre mode particulier de réalisation de l'invention, le dispositif de paramétrage 13 est compris dans le dispositif portatif 6 et le procédé de paramétrage est mis en œuvre par le dispositif portatif 6 de l'utilisateur.

Dans une première variante de ce mode particulier de réalisation, l'étape de détection du changement de contexte d'utilisation E0 peut être réalisée lors de la modification du mode d'affichage des informations restituées par le dispositif portatif par exemple de façon manuelle par l'utilisateur sur le dispositif portatif. L'utilisateur peut par exemple pour cela appuyer sur un bouton 10 du dispositif portatif 6. Le dispositif portatif reçoit alors une commande manuelle dudit utilisateur lors d'une étape de réception E011. Le dispositif portatif peut comprendre plusieurs boutons, chacun associé à un contexte d'utilisation particulier. L'utilisateur peut alors signifier au dispositif portatif un changement de son contexte d'utilisation, en fonction de l'évolution de ses activités par exemple, par un simple et unique appui sur le bouton approprié. Alternativement, une liste de contextes d'utilisation peut être associée à un bouton du dispositif portatif. L'utilisateur peut alors, par un ou plusieurs appuis successifs sur ce bouton, parcourir cette liste et sélectionner un nouveau contexte d'utilisation du dispositif portatif.

Dans une deuxième variante de ce mode particulier de réalisation, l'étape de détection du changement de contexte d'utilisation E0 est réalisée de manière automatique. Pour ce faire le dispositif portatif détecte de manière automatique le contexte de l'utilisateur lors d'une étape de détection E012 et sélectionne en conséquence un contexte d'utilisation adapté.

Une telle détection automatique peut comprendre une étape de localisation E0121 dudit dispositif portatif 6. L'objet portatif peut alors comprendre un module de géolocalisation. Une telle géolocalisation peut être réalisée de manière absolue, par exemple à l'aide d'un récepteur GPS, ou bien de manière relative par rapport à des points d'accès d'un réseau sans-fil tel qu'un réseau téléphonique ou Wi-fi. Le contexte de l'utilisateur peut alors être déterminé automatiquement en fonction de sa localisation. Par exemple un contexte de travail peut être détecté lorsque l'utilisateur est localisé à son bureau ou à l'adresse d'une entreprise, alors qu'un contexte maison peut être détecté si l'utilisateur est localisé à son domicile.

Une telle détection automatique du contexte peut également comprendre la détection d'un dispositif de communication dans l'environnement dudit utilisateur E0122. Le dispositif portatif peut par exemple détecter une borne d'un réseau de type réseau Wifi associé à la maison ou au bureau, un appareil connecté comme un autoradio présent dans la voiture de l'utilisateur ou encore une étiquette RFID apposée sur un objet comme un vélo pour détecter un changement de contexte de l'utilisateur. A titre d'exemple, si le dispositif portatif détecte l'étiquette RFID du vélo de l'utilisateur pendant une certaine durée, il est possible d'en déduire raisonnablement que l'utilisateur s'est mis à utiliser son vélo et de déterminer un nouveau contexte de type sport.

Suite à la détection du changement de contexte d'utilisation du dispositif portatif, lors de l'étape E1, le dispositif de paramétrage du dispositif portatif détermine un nouveau statut de disponibilité en fonction du changement de contexte d'utilisation détecté. Une telle détermination est par exemple faite à partir d'un ensemble de statuts de disponibilité dont les paramètres sont stockés dans une mémoire du dispositif portatif ou du terminal 11. Chaque statut de disponibilité est associé à un contexte d'utilisation du dispositif portatif. Pour chaque fonctionnalité du service de communication telle que les appels voix ou visio, les messages textes, les messages vocaux ou vidéo, les paramètres d'un statut de disponibilité indiquent si la fonctionnalité est autorisée ou non dans le contexte d'utilisation du dispositif portatif.

Suite à la détection automatique de changement de contexte, lors d'une étape de confirmation E014 le dispositif portatif peut transmettre une requête de confirmation de son changement de statut de disponibilité à l'utilisateur afin que ce dernier puisse vérifier le nouveau statut sélectionné automatiquement et empêcher une mise à jour automatique du statut de disponibilité selon lequel le service de configuration est configuré si le contexte de l'utilisateur a été mal déterminé par le dispositif portatif et qu'un nouveau statut inadapté a été sélectionné. Il est possible de prévoir une validation automatique de cette requête au bout d'une durée prédéterminée sans réponse de l'utilisateur.

Lorsque le dispositif de paramétrage 13 du dispositif portatif a déterminé un changement de statut de disponibilité de l'utilisateur lors de l'étape E1, il transmet, lors d'une étape de transmission E2, un message relatif au nouveau statut de disponibilité dudit utilisateur à destination du serveur 1 du fournisseur de service ou du module de communication de sorte le service de communication soit configuré selon le nouveau statut de disponibilité.

Dans un premier mode de mise en œuvre, le message relatif au nouveau statut de disponibilité peut être transmis par le dispositif de paramétrage 13 au serveur 1 du fournisseur de service 2 qui va paramétrer ledit service à délivrer au module de communication 3 en fonction du nouveau statut de disponibilité reçu. Cette transmission peut être réalisée directement vers le serveur 1 ou bien par l'intermédiaire du module de communication 3.

Dans un deuxième mode de mise en œuvre, le module de communication 3 ou le dispositif de paramétrage 13, et le serveur 1 du fournisseur de service, peuvent être reliés à un serveur de gestion de contexte 12. Le dispositif de paramétrage peut alors transmettre le message relatif au nouveau statut de disponibilité dudit utilisateur à ce serveur de gestion contexte, directement ou par l'intermédiaire du module de communication.

Dans une première variante de mise en œuvre, le nouveau statut de disponibilité est alors stocké dans les moyens de stockage dudit serveur de gestion de contexte 12 et mis à disposition du serveur du fournisseur de service. Celui-ci peut par exemple s'enquérir périodiquement du statut de disponibilité de l'utilisateur auprès du serveur de gestion de contexte.

Dans une deuxième variante de mise en œuvre, le serveur de gestion de contexte 12 peut stocker des informations de paramétrage du service délivré au module de communication 3 de l'utilisateur permettant de paramétrer le module de communication, associées à des statuts de disponibilité. Le serveur de gestion de contexte peut alors, suite à la réception d'un message relatif au nouveau statut de disponibilité de l'utilisateur, transmettre les informations de paramétrage associées à ce nouveau statut de disponibilité au serveur du fournisseur de service pour que ce dernier paramètre ledit service en fonction du nouveau statut de disponibilité.

Le serveur 1 du fournisseur de service 2 peut, à partir du nouveau statut de disponibilité ou des informations de paramétrage associées, paramétrer le service de communication délivré au module de communication 3. Par exemple, si le nouveau statut de disponibilité indique que la réception d'appels n'est plus permise, le serveur 1 du fournisseur de service modifie la logique du service de communication, via une configuration des serveurs du cœur de réseau de communication (non représentée) pour bloquer la transmission d'appels entrants au module de communication, et/ou activer un renvoi d'appel vers une boite vocale ou un autre terminal. Si le service de communication permet à chaque utilisateur d'avoir connaissance du statut de disponibilité des autres utilisateurs du service, par exemple dans le cas d'un chat ou d'une messagerie de réseau social, le serveur du fournisseur de service peut indiquer aux autres utilisateurs le nouveau statut de disponibilité de l'utilisateur.

Lors d'une étape de restitution E3, le dispositif portatif 6 peut restituer à l'utilisateur 4 par l'intermédiaire de ladite interface utilisateur 7 une information relative à son nouveau statut de disponibilité.

Une telle information restituée peut être une information visuelle, telle que l'affichage d'un pictogramme, audio, comme la diffusion d'une sonnerie ou d'un message vocal associé au nouveau statut de disponibilité sélectionné, ou vibratoire.

Lorsque ladite interface utilisateur 7 du dispositif portatif 6 affiche des éléments d'interface correspondant à un ensemble de fonctionnalités à afficher, l'étape de restitution d'une information E3 peut comprendre une sélection E31 d'un ensemble de fonctionnalités à afficher en fonction dudit nouveau statut de disponibilité de l'utilisateur et un affichage E32 des éléments d'interface correspondant audit ensemble de fonctionnalités sélectionnées. Par exemple, le dispositif portatif peut, dans un contexte de travail, afficher l'heure et le prochain rendez-vous noté dans l'agenda de l'utilisateur. Dans un contexte sportif, le dispositif portatif peut afficher un chronomètre, un altimètre et une indication de la météo à venir. La sélection d'un nouveau statut de disponibilité associé à un certain contexte peut alors déclencher une adaptation des informations affichées sur le dispositif portatif pour que celles-ci correspondent au nouveau contexte de l'utilisateur sans que celui-ci ait à configurer manuellement les fonctionnalités à afficher. De plus, une telle adaptation automatique des fonctionnalités affichées augmente la probabilité que l'utilisateur s'aperçoive que son statut de disponibilité courant n'est plus adapté à son contexte. En effet, en reprenant l'exemple précédent, si le dispositif portatif affiche l'altitude de l'utilisateur alors que celui-ci se trouve à son bureau, l'utilisateur peut s'apercevoir immédiatement que le contexte d'utilisation du dispositif portatif sélectionné n'est pas le bon et donc que le statut de disponibilité associé selon lequel le service de communication délivré au module de communication n'est pas correcte.

En outre, le dispositif de paramétrage 13 peut, suite à la détermination d'un nouveau statut de disponibilité paramétrer ledit dispositif portatif 6 ou ledit module de communication 3 en fonction du nouveau statut de disponibilité de l'utilisateur, lors d'une étape de paramétrage E4. Le dispositif de paramétrage déterminant que l'utilisateur entre dans un cinéma peut par exemple passer le téléphone mobile de l'utilisateur comprenant le module de communication en mode silencieux pour éviter tout dérangement tel qu'un signal sonore lié à une notification comme un rappel d'agenda.

Un tel procédé de paramétrage permet ainsi à un utilisateur de mettre à jour facilement son statut de disponibilité et de pouvoir avoir connaissance en permanence de son statut courant afin de le modifier dès que nécessaire pour le maintenir à jour. Les services de communications rendus à l'utilisateur peuvent ainsi être paramétrés correctement à tout instant pour adopter un comportement adapté au contexte de l'utilisateur.

## Revendications

1. Procédé de paramétrage d'un service de communication délivré par un serveur (1) d'un fournisseur de service (2) à un module de communication (3) d'un utilisateur (4), le service de communication étant configuré selon un statut de disponibilité de l'utilisateur, le procédé comprenant les étapes suivantes:
- détection (E0) par un dispositif de paramétrage (13) inclut dans un dispositif portatif, d'un changement de contexte d'utilisation du dispositif portatif dudit utilisateur distinct dudit module de communication (3),
- détermination (E1) par le dispositif de paramétrage (13), d'un nouveau statut de disponibilité en fonction du changement de contexte d'utilisation détecté,
- transmission (E2) par le dispositif de paramétrage (13), d'un message relatif au nouveau statut de disponibilité, à destination du serveur (1) du fournisseur de service (2) de sorte que le service de communication soit configuré à partir du nouveau statut de disponibilité déterminé,
**caractérisé en ce que** le procédé comprend en outre une étape de restitution (E3) audit utilisateur (4) par l'intermédiaire d'une interface utilisateur (7) du dispositif portatif, d'une information relative au nouveau statut de disponibilité déterminé, et dans lequel,
ladite interface utilisateur (7) du dispositif portatif affichant des éléments d'interface correspondant à un ensemble de fonctionnalités à afficher, l'étape de restitution d'une information relative au nouveau statut de disponibilité de l'utilisateur (E3) comprend une étape de sélection (E31) d'un ensemble de fonctionnalités à afficher en fonction dudit nouveau statut de disponibilité de l'utilisateur lesdites fonctionnalités correspondant à des fonctionnalités du service de communication et l'affichage (E32) des éléments d'interface correspondant audit ensemble de fonctionnalités sélectionnées.

2. Procédé selon la revendication 1, dans lequel la détection d'un changement de contexte d'utilisation comprend une étape de réception (E013) par le module de communication d'un message en provenance du dispositif portatif comprenant une information indiquant un changement de contexte d'utilisation du dispositif portatif.

3. Procédé selon l'une quelconque des revendications 1 à 2, dans lequel l'étape de détection du changement de contexte d'utilisation comprend une étape de modification du mode d'affichage des informations restituées par le dispositif portatif (E011).

4. Procédé selon l'une des revendications précédentes, dans lequel l'étape de détection du changement de contexte d'utilisation comprend une étape de détection automatique du contexte de l'utilisateur (E012).

5. Procédé selon la revendication précédente, dans lequel l'étape de détection automatique du contexte de l'utilisateur comprend une étape de localisation (E0121) dudit dispositif portatif.

6. Procédé selon l'une des revendications 4 ou 5, dans lequel l'étape de détection automatique du contexte de l'utilisateur comprend une étape de détection (E0122) d'un dispositif de communication dans l'environnement dudit utilisateur.

7. Procédé selon l'une des revendications précédentes comprenant en outre une étape de paramétrage (E4) dudit dispositif portatif (6) ou dudit module de communication (3) en fonction du nouveau statut de disponibilité de l'utilisateur.

8. Produit programme d'ordinateur comprenant des instructions de code qui implémente un procédé selon l'une quelconque des revendications précédentes lorsque ce programme est exécuté par un processeur.

9. Dispositif portatif (6) comprenant un dispositif de paramétrage (13) d'un service de communication délivré par un serveur (1) d'un fournisseur de service (2) à un module de communication (3) d'un utilisateur (4), le service de communication étant configuré selon un statut de disponibilité de l'utilisateur, ledit dispositif portatif comprenant :
- un module de traitement de données (9) apte à détecter un changement de contexte d'utilisation du dispositif portatif dudit utilisateur distinct dudit module de communication (3) et à déterminer un nouveau statut de disponibilité d'un utilisateur (4) en fonction du changement de contexte d'utilisation détecté,
- un module d'interface (8) apte à transmettre un message relatif au nouveau statut de disponibilité dudit utilisateur à destination du serveur (1) du fournisseur de service (2), de sorte que le service de communication soit configuré à partir du nouveau statut de disponibilité de l'utilisateur déterminé, **caractérisé en ce que** ledit dispositif comprend
- une interface utilisateur (7) apte à restituer audit utilisateur (4) une information relative au nouveau statut de disponibilité, apte à sélectionner un ensemble de fonctionnalités à afficher en fonction dudit nouveau status de disponibilité de l'utilisateur, lesdites fonctionnalités correspondant à des fonctionnalités du service de communication et apte à afficher des éléments d'interface correspondant à l' ensemble de fonctionnalités sélectionnées.

10. Système de paramétrage (5) d'un service de communication comprenant un dispositif portatif (6) selon la revendication 9, un module de communication (3) et un serveur (1) d'un fournisseur de service (2).

## Patentansprüche

1. Verfahren zur Parametrierung eines Kommunikationsdienstes, der von einem Server (1) eines Dienstanbieters (2) für ein Kommunikationsmodul (3) eines Benutzers (4) erbracht wird, wobei der Kommunikationsdienst gemäß einem Verfügbarkeitsstatus des Benutzers konfiguriert wird,
wobei das Verfahren die folgenden Schritte umfasst:
- Erkennung (E0), durch eine in einem tragbaren Gerät enthaltene Parametrierungsvorrichtung (13), einer Änderung des Verwendungskontexts des tragbaren Gerätes des Benutzers, das von dem Kommunikationsmodul (3) verschieden ist,
- Bestimmung (E1), durch die Parametrierungsvorrichtung (13), eines neuen Verfügbarkeitsstatus in Abhängigkeit von der erkannten Änderung des Verwendungskontexts,
- Übertragung (E2), durch die Parametrierungsvorrichtung (13), einer Nachricht, die sich auf den neuen Verfügbarkeitsstatus bezieht, an den Server (1) des Dienstanbieters (2), so dass der Kommunikationsdienst anhand des bestimmten neuen Verfügbarkeitsstatus konfiguriert wird,
**dadurch gekennzeichnet, dass** das Verfahren außerdem einen Schritt der Wiedergabe (E3) einer Information, die sich auf den bestimmten neuen Verfügbarkeitsstatus bezieht, für den Benutzer (4) über eine Benutzerschnittstelle (7) des tragbaren Gerätes umfasst, und wobei, wenn die Benutzerschnittstelle (7) des tragbaren Gerätes Schnittstellenelemente anzeigt, die einer Gesamtheit von anzuzeigenden Funktionen entsprechen, der Schritt der Wiedergabe einer Information, die sich auf den neuen Verfügbarkeitsstatus des Benutzers bezieht (E3), einen Schritt der Auswahl (E31) einer Gesamtheit von anzuzeigenden Funktionen in Abhängigkeit von dem neuen Verfügbarkeitsstatus des Benutzers, wobei diese Funktionen Funktionen des Kommunikationsdienstes entsprechen, und die Anzeige (E32) der Schnittstellenelemente, die dieser Gesamtheit von ausgewählten Funktionen entsprechen, umfasst.

2. Verfahren nach Anspruch 1, wobei die Erkennung einer Änderung des Verwendungskontexts einen Schritt des Empfangs (E013), durch das Kommunikationsmodul, einer Nachricht von dem tragbaren Gerät umfasst, welche eine Information umfasst, die eine Änderung des Verwendungskontexts des tragbaren Gerätes anzeigt.

3. Verfahren nach einem der Ansprüche 1 bis 2, wobei der Schritt der Erkennung der Änderung des Verwendungskontexts einen Schritt der Modifikation des Anzeigemodus der Informationen, die von dem tragbaren Gerät wiedergegeben werden (E011), umfasst.

4. Verfahren nach einem der vorhergehenden Ansprüche, wobei der Schritt der Erkennung der Änderung des Verwendungskontexts einen Schritt der automatischen Erkennung des Kontexts des Benutzers (E012) umfasst.

5. Verfahren nach dem vorhergehenden Anspruch, wobei der Schritt der automatischen Erkennung des Kontexts des Benutzers einen Schritt der Ortung (E0121) des tragbaren Gerätes umfasst.

6. Verfahren nach einem der Ansprüche 4 oder 5, wobei der Schritt der automatischen Erkennung des Kontexts des Benutzers einen Schritt der Erkennung (E0122) einer Kommunikationsvorrichtung in der Umgebung des Benutzers umfasst.

7. Verfahren nach einem der vorhergehenden Ansprüche, welches außerdem einen Schritt der Parametrierung (E4) des tragbaren Gerätes (6) oder des Kommunikationsmoduls (3) in Abhängigkeit von dem neuen Verfügbarkeitsstatus des Benutzers umfasst.

8. Computerprogrammprodukt, welches Codeanweisungen umfasst und welches ein Verfahren nach einem der vorhergehenden Ansprüche implementiert, wenn dieses Programm von einem Prozessor ausgeführt wird.

9. Tragbares Gerät (6), welches eine Vorrichtung zur Parametrierung (13) eines Kommunikationsdienstes, der von einem Server (1) eines Dienstanbieters (2) für ein Kommunikationsmodul (3) eines Benutzers (4) erbracht wird, umfasst, wobei der Kommunikationsdienst gemäß einem Verfügbarkeitsstatus des Benutzers konfiguriert wird, wobei das tragbare Gerät umfasst:
- ein Datenverarbeitungsmodul (9), das in der Lage ist, eine Änderung des Verwendungskontexts des tragbaren Gerätes des Benutzers, das von dem Kommunikationsmodul (3) verschieden ist, zu erkennen und einen neuen Verfügbarkeitsstatus eines Benutzers (4) in Abhängigkeit von der erkannten Änderung des Verwendungskontexts zu bestimmen,
- ein Schnittstellenmodul (8), das in der Lage ist, eine Nachricht, die sich auf den neuen Verfügbarkeitsstatus des Benutzers bezieht, an den Server (1) des Dienstanbieters (2) zu übertragen, so dass der Kommunikationsdienst anhand des bestimmten neuen Verfügbarkeitsstatus des Benutzers konfiguriert wird,
**dadurch gekennzeichnet, dass** das Gerät umfasst:
- eine Benutzerschnittstelle (7), die in der Lage ist, für den Benutzer (4) eine Information wiederzugeben, die sich auf den neuen Verfügbarkeitsstatus bezieht, in der Lage ist, eine Gesamtheit von anzuzeigenden Funktionen in Abhängigkeit von dem neuen Verfügbarkeitsstatus des Benutzers auszuwählen, wobei diese Funktionen Funktionen des Kommunikationsdienstes entsprechen, und in der Lage ist, Schnittstellenelemente anzuzeigen, die der Gesamtheit von ausgewählten Funktionen entsprechen.

10. System zur Parametrierung (5) eines Kommunikationsdienstes, welches ein tragbares Gerät (6) nach Anspruch 9, ein Kommunikationsmodul (3) und einen Server (1) eines Dienstanbieters (2) umfasst.

## Claims

1. Method for parametrizing a communication service delivered by a server (1) of a service provider (2) to a communication module (3) of a user (4), the communication service being configured according to an availability status of the user,
the method comprising the following steps:
- detection (E0) by a parametrizing device (13) included in a handheld device, of a change of context of use of the handheld device of said user distinct from said communication module (3),
- determination (E1) by the parametrizing device (13), of a new availability status as a function of the change of context of use detected,
- transmission (E2) by the parametrizing device (13), of a message relating to the new availability status, destined for the server (1) of the service provider (2) so that the communication service is configured on the basis of the new determined availability status,
**characterized in that** the method furthermore comprises a step (E3) of rendering to said user (4) by way of a user interface (7) of the handheld device, an information item relating to the new availability status determined, and in which,
said user interface (7) of the handheld device displaying interface elements corresponding to a set of functionalities to be displayed, the step of rendering an information item relating to the new availability status of the user (E3) comprises a step (E31) of selecting a set of functionalities to be displayed as a function of said new availability status of the user said functionalities corresponding to functionalities of the communication service
and the displaying (E32) of the interface elements corresponding to said set of selected functionalities.

2. Method according to Claim 1, in which the detection of a change of context of use comprises a step of reception (E013) by the communication module of a message originating from the handheld device comprising an information item indicating a change of context of use of the handheld device.

3. Method according to either one of Claims 1 to 2, in which the step of detecting the change of context of use comprises a step of modifying the mode of display of the information items rendered by the handheld device (E011).

4. Method according to one of the preceding claims, in which the step of detecting the change of context of use comprises a step of automatically detecting the context of the user (E012).

5. Method according to the preceding claim, in which the step of automatically detecting the context of the user comprises a step (E0121) of locating said handheld device.

6. Method according to one of Claims 4 or 5, in which the step of automatically detecting the context of the user comprises a step (E0122) of detecting a communication device in the environment of said user.

7. Method according to one of the preceding claims furthermore comprising a step (E4) of parametrizing said handheld device (6) or said communication module (3) as a function of the new availability status of the user.

8. Computer program product comprising code instructions which run a method according to any one of the preceding claims when this program is executed by a processor.

9. Handheld device (6) comprising a device (13) for parametrizing a communication service delivered by a server (1) of a service provider (2) to a communication module (3) of a user (4), the communication service being configured according to an availability status of the user, said handheld device comprising:
- a data processing module (9) able to detect a change of context of use of the handheld device of said user distinct from said communication module (3) and to determine a new availability status of a user (4) as a function of the change of context of use detected,
- an interface module (8) able to transmit a message relating to the new availability status of said user destined for the server (1) of the service provider (2), so that the communication service is configured on the basis of the new availability status of the user determined, **characterized in that** said device comprises
- a user interface (7) able to render to said user (4) an information item relating to the new availability status, able to select a set of functionalities to be displayed as a function of said new availability status of the user, said functionalities corresponding to functionalities of the communication service
and able to display interface elements corresponding to the set of selected functionalities.

10. System (5) for parametrizing a communication service comprising a handheld device (6) according to Claim 9, a communication module (3) and a server (1) of a service provider (2).
